# EUROPEAN PATENT SPECIFICATION

(11) **EP 3 038 085 B1**
(45) Date of publication and mention of the grant of the patent: **12.04.2017**
(21) Application number: 15200162.4
(22) Date of filing: 15.12.2015
(51) Int. Cl.: G09G 3/20, G09G 3/36

(54) **DISPLAY DEVICE AND METHOD OF DRIVING THE SAME**
ANZEIGEVORRICHTUNG UND VERFAHREN ZUR ANSTEUERUNG DAVON
DISPOSITIF D'AFFICHAGE ET SON PROCÉDÉ DE COMMANDE

(30) Priority: 24.12.2014 KR 20140188924
(43) Date of publication of application: 29.06.2016
(73) Proprietor: LG Display Co., Ltd., Seoul 07336 (KR)
(72) Inventor: JANG, Hoon, 411-726 Gyeonggi-do (KR); JANG, Wonyong, 421-750 Gyeonggi-do (KR)
(74) Representative: Ter Meer Steinmeister & Partner

(56) References cited:
- WO-A1-2012/161022
- WO-A1-2014/061574
- US-A1- 2008 225 034
- US-A1- 2008 238 852
- US-A1- 2014 092 144

## Description

### BACKGROUND

### Field

The present invention relates to a display device and a method of driving the same.

### Related Art

As information-oriented technology develops, a market of a display device, which is a connection medium between a user and information has been increased. Accordingly, use of a display device such as an Organic Light Emitting Display (OLED), a Liquid Crystal Display (LCD), and a Plasma Display Panel (PDP) has been increased.

The OLED and the LCD of the foregoing display devices include a display panel including a plurality of subpixels disposed in a matrix form, a driver that drives the display panel, and a timing controller that controls the driver. The driver includes a scan driver that supplies a scan signal (or a gate signal) to the display panel and a data driver that supplies a data signal to the display panel.

In order to block a voltage output from a power supply unit and to discharge electric charges charged in a display panel when power is turned off, the foregoing display device supplies a gate signal corresponding to a gate high voltage to entire gate lines.

The conventionally suggested display device is implemented to trigger a gate signal to a gate high voltage in a state in which a power supply unit stops operation due to power off. Accordingly, a gate high voltage is output in a level lower than that at a normal operation. However, when a level of a gate high voltage is so low, a discharging operation may be recognized by an eye of a person or image quality deterioration (screen shake) may occur. Therefore, the conventionally suggested display device cannot perform discharging with a stable voltage and thus enhancement thereof is requested.

In US 2008/0225034 A1, an image sticking erasing circuit includes a detection circuit and a switching circuit connected to the detection circuit. The detection circuit is for use in detecting a first voltage signal, which closely follows the variation of the voltage source, and a reference voltage, which loosely follows the variation of the voltage source. When the detection circuit determines that the first voltage signal is lower than a first threshold value, the switching circuit switches the gate of a driving transistor to a second voltage signal, which loosely follows the voltage source. When the detection circuit determines that the reference voltage signal is lower than a second threshold value, the switching circuit switches the gate of a driving transistor to a low voltage state.

In US 2014/0092144 A1 an organic light emitting display and a method of erasing an image sticking thereof are provided. In the image sticking erasing method, a panel driving circuit is driven by a logic power voltage during a power-off delay time to discharge pixels.

### SUMMARY

The above described objects are solved by the features of the independent claims. Preferably, a display device includes a display panel, a gate driver, a data driver, and a power supply unit. The display panel displays an image. The gate driver supplies a gate signal to the display panel. The data driver supplies a data signal to the display panel. The power supply unit generates and outputs a voltage to supply to the gate driver and the data driver. The power supply unit has a dummy switching period in which a switching signal that generates a gate high voltage is maintained for a predetermined time, even if an input voltage input from the outside is dropped to a level of Under Voltage Lock Out (hereinafter, UVLO) or less due to power off.

Preferably, there is provided a method of driving a display device. The method includes: displaying an image in a display panel; monitoring a power supply unit that supplies a voltage to a gate driver and data driver that drive the display panel and detecting whether an input voltage input to the power supply unit is dropped to a level of Under Voltage Lock Out (UVLO) or less; and performing, if an input voltage input to the power supply unit is dropped to a level of the UVLO or less due to power off, dummy switching so as to maintain a switching signal that generates a gate high voltage to supply to the display panel for a predetermined time.

### BRIEF DESCRIPTION OF THE DRAWINGS

The accompany drawings, which are included to provide a further understanding of the invention and are incorporated on and constitute a part of this specification illustrate embodiments of the invention and together with the description serve to explain the principles of the invention.
FIG. 1 is a block diagram illustrating a display device;
FIG. 2 is a diagram illustrating a configuration of a subpixel of FIG. 1;
FIG. 3 is a waveform diagram illustrating a method of driving a device according to a first exemplary embodiment of the present invention;
FIG. 4 is a diagram illustrating a circuit configuration of a portion of a power supply unit according to a first exemplary embodiment of the present invention;
FIG. 5 is a diagram illustrating a circuit configuration of a gate voltage driver of FIG. 4;
FIG. 6 is a diagram illustrating a circuit configuration of a gate voltage driver of FIG. 4 according to a second exemplary embodiment of the present invention;
FIG. 7 is a waveform diagram illustrating a method of driving a device according to a third exemplary embodiment of the present invention;
FIG. 8 is a diagram illustrating a circuit configuration of a portion of a power supply unit according to a third exemplary embodiment of the present invention;
FIGS. 9 and 10 are graphs illustrating an effect according to a third exemplary embodiment of the present invention;
FIG. 11 is a waveform diagram illustrating a method of driving a device according to a fourth exemplary embodiment of the present invention;
FIG. 12 is a diagram illustrating a circuit configuration of a portion of a power supply unit according to a fourth exemplary embodiment of the present invention; and
FIG. 13 is a diagram illustrating a circuit configuration of a gate voltage driver of FIG. 12.

### DETAILED DESCRIPTION

Reference will now be made in detail embodiments of the invention examples of which are illustrated in the accompanying drawings.

Hereinafter, exemplary embodiments of the present invention will be described in detail with reference to the accompanying drawings.

A display device of the present invention described hereinafter may select a display panel such as a liquid crystal display panel, an organic light emitting display panel, an electrophoresis display panel, and a plasma display panel, but the display device is not limited thereto. However, in the following description, for convenience of description, a display device based on a liquid crystal display panel will be described as an example.

### <First exemplary embodiment>

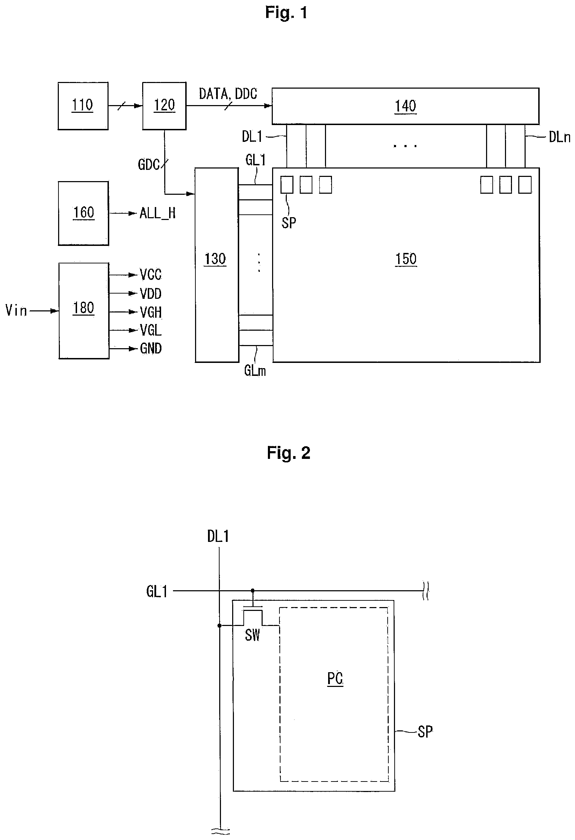

FIG. 1 is a block diagram illustrating a display device, and FIG. 2 is a diagram illustrating a configuration of a subpixel of FIG. 1.

As shown in FIG. 1, the display device includes an image supply unit 110, a timing controller 120, a gate driver 130, a data driver 140, a display panel 150, a signal output unit 160, and a power supply unit 180.

The image supply unit 110 performs an image processing of a data signal and outputs the data signal together with a vertical synchronization signal, a horizontal synchronization signal, a data enable signal, and a clock signal. The image supply unit 110 supplies a vertical synchronization signal, a horizontal synchronization signal, a data enable signal, a clock signal, and a data signal to the timing controller 120 through a Low Voltage Differential Signaling (LVDS) interface or a Transition Minimized Differential Signaling (TMDS) interface.

The timing controller 120 receives the supply of a data signal DATA from the image supply unit 110 and outputs a gate timing control signal GDC for controlling operation timing of the gate driver 130 and a data timing control signal DDC for controlling operation timing of the data driver 140.

The timing controller 120 outputs a data signal DATA together with a gate timing control signal GDC and a data timing control signal DDC through a communication interface (e.g., EPI) and controls operation timing of the gate driver 130 and the data driver 140.

The gate driver 130 outputs a gate signal (or a scan signal) while shifting a level of a gate voltage in response to a gate timing control signal GDC supplied from the timing controller 120. The gate driver 130 includes a level shifter and a shift register.

The gate driver 130 supplies a gate signal to subpixels SP included in the display panel 150 through gate lines GLl-GLm. The gate driver 130 is formed in an Integrated Circuit (IC) form or is formed in a Gate In Panel method in the display panel 150. A portion formed in a Gate In Panel method in the gate driver 130 is a shift register.

The data driver 140 samples and latches a data signal DATA in response to a data timing control signal DDC supplied from the timing controller 120 and converts and outputs an analog signal to a digital signal to correspond to a gamma reference voltage.

The data driver 140 supplies a data signal DATA to subpixels SP included in the display panel 150 through data lines DL1-DLn. The data driver 140 is formed in an Integrated Circuit (IC) form.

The signal output unit 160 generates and outputs a gate all high signal ALL H that changes an entire gate signal supplied through entire gate lines GL1-GLm of the display panel 150 to a gate high voltage. The signal output unit 160 may monitor an input voltage Vin input to the power supply unit 180 or an output voltage VCC output from the power supply unit 180.

When a level of an input or output voltage is dropped, the signal output unit 160 may trigger a gate signal to a gate high voltage. However, this is an illustration, and the signal output unit 160 may be included in the power supply unit 180 or another circuit. The signal output unit 160 may generate and output a gate all high signal ALL_H based on a gate high voltage VGH output from the power supply unit 180.

The power supply unit 180 generates and outputs a power source such as a first power source voltage VDD, a second power source voltage VCC, a gate high voltage VGH, a gate low voltage VGL, and a low potential voltage GND based on an input voltage Vin. An output voltage output from the power supply unit 180 is divided and supplied to the timing controller 120, the gate driver 130, the data driver 140, and the display panel 150.

The display panel 150 displays an image to correspond to a gate signal supplied from the gate driver 130 and a data signal DATA supplied from the data driver 140. The display panel 150 includes subpixels SP that emit light themselves in order to display an image or that control light of the outside.

As shown in FIG. 2, one subpixel includes a switching thin film transistor SW connected to (or formed in a crossing region) a gate line GL1 and a data line DL1 and a pixel circuit PC that operates to correspond to a data signal DATA supplied through the switching thin film transistor SW. The subpixels SP are formed with a liquid crystal display panel including a liquid crystal element according to a configuration of a pixel circuit PC or an organic light emitting display panel including an organic light emitting element.

When the display panel 150 is formed with a liquid crystal display panel, the display panel 150 is implemented with a Twisted Nematic (TN) mode, a Vertical Alignment (VA) mode, an In Plane Switching (IPS) mode, a Fringe Field Switching (FFS) mode, or an Electrically Controlled Birefringence (ECB) mode. When the display panel 150 is formed with an organic light emitting display panel, the display panel 150 is implemented with a Top-Emission method, a Bottom-Emission method, or a Dual-Emission method.

At power off that blocks a voltage output from the power supply unit 180, in order to discharge electric charges charged at the display panel 150, the foregoing display device supplies a gate signal corresponding to a gate high voltage VGH to entire gate lines GL1-GLn.

Hereinafter, a problem of a conventionally suggested display device and an exemplary embodiment of the present invention for enhancing the problem will be described.

A power supply unit of the conventionally suggested display device is implemented to trigger a gate signal to a gate high voltage in a state in which a power supply unit stops operation due to power off. Accordingly, a gate high voltage output from the power supply unit is output to a level lower than that in a normal operation.

However, when a level of a gate high voltage is so low, a discharging operation of a panel may be recognized by an eye of a person or image quality deterioration (screen shake) may occur. Therefore, the conventionally suggested display device cannot perform discharging of a panel with a stable voltage and thus enhancement thereof is requested.

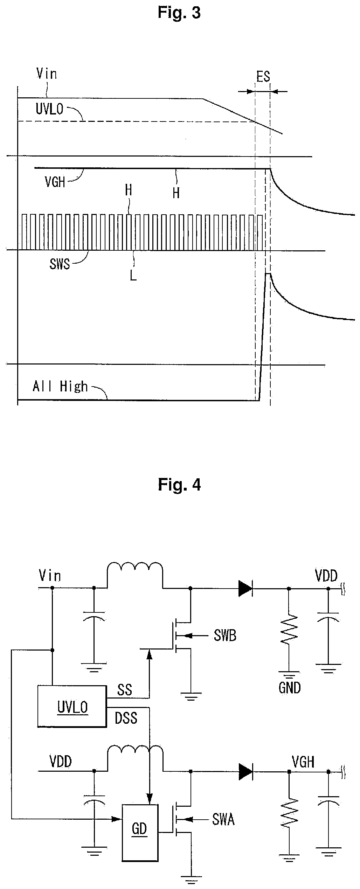

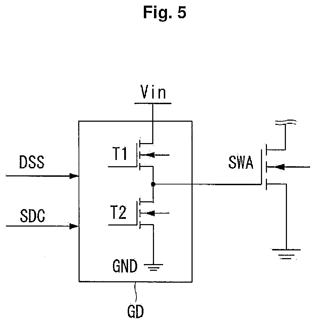

FIG. 3 is a waveform diagram illustrating a method of driving a device according to a first exemplary embodiment of the present invention, FIG. 4 is a diagram illustrating a circuit configuration of a portion of a power supply unit according to a first exemplary embodiment of the present invention, and FIG. 5 is a diagram illustrating a circuit configuration of a gate voltage driver of FIG. 4.

As shown in FIGS. 3 and 4, in a display device according to a first exemplary embodiment of the present invention, even after an input voltage Vin input to a power supply unit is dropped to a level of a Under Voltage Lock Out (hereinafter, UVLO) or less due to power off, a switching signal SWS for driving switching transistors SWA and SWB is not stopped but maintained (or delayed) for a predetermined time. In FIG. 3, All High means a gate all high signal.

In the conventional art, when an input voltage Vin is dropped to UVLO or less due to power off, a switching signal SWS for driving switching transistors SWA and SWB is stopped. Therefore, the conventional art forms a gate high voltage VGH with a voltage charged at the inside of a power supply unit in a state in which the power supply unit stops operation.

However, in a first exemplary embodiment of the present invention, even if an input voltage Vin is dropped to UVLO or less due to power off, a switching signal SWS for driving a first switching transistor SWA is further maintained for a dummy switching period ES. Therefore, in a first exemplary embodiment of the present invention, in a state in which a power supply unit maintains operation for a predetermined time, a voltage is generated and a gate high voltage VGH is formed based on the generated voltage.

Therefore, in a first exemplary embodiment of the present invention, a gate all high signal (All High) is generated based on a high level of gate high voltage VGH that has occurred for a dummy switching period ES. Therefore, in a first exemplary embodiment of the present invention, when power is turned off (after UVLO Lock), discharging of a panel may be stably performed.

Hereinafter, a description will be made based on a circuit configuration of FIGS. 4 and 5.

A power supply unit according to a first exemplary embodiment of the present invention generates and outputs a first power source voltage VDD and a gate high voltage VGH based on an input voltage Vin. The power supply unit includes an UVLO circuit unit (UVLO), a gate voltage driver (GD), and first and second switching transistors SWA and SWB. The power supply unit includes a first power source voltage generator that generates and outputs a first power source voltage VDD and a gate high voltage generator that generates and outputs a gate high voltage VGH.

The UVLO monitors an input voltage Vin, and when the input voltage Vin is changed to a level lower than an operation voltage for operation of the power supply unit, the UVLO performs a function of stopping a switching operation in order to protect a circuit.

For example, when an input voltage Vin is changed (dropped) to a level lower than an operation voltage due to power off of the device, the UVLO immediately stops a switching operation of a second switching transistor SWB. However, even if an input voltage Vin is dropped to a level lower than an operation voltage due to power off, the UVLO maintains a switching operation of the first switching transistor SWA for a predetermined time (dummy switching period).

The GD outputs a switching signal SWS that controls the first switching transistor SWA to boost a first power source voltage VDD transferred from a first power source voltage generator to convert the first power source voltage VDD to a gate high voltage VGH.

The GD outputs a switching signal SWS that may maintain a switching operation of the first switching transistor SWA for a predetermined time (dummy switching period) to correspond to a switching delay signal DSS transferred from the UVLO. When a switching delay signal DSS is transferred from the UVLO, the GD may output a switching signal that generates a gate high voltage VGH using an input voltage Vin as a power source.

The first switching transistor SWA switches a first power source voltage VDD to correspond to a switching signal SWS output from the GD and generates and outputs a gate high voltage VGH. The first switching transistor SWA may generate and output a gate high voltage VGH for a predetermined time (dummy switching period) to correspond to a switching delay signal DSS transferred from the UVLO.

The second switching transistor SWB switches an input voltage Vin to correspond to a signal output from an internal circuit and generates and outputs a first power source voltage VDD. The second switching transistor SWB stops a switching operation to correspond to a switching stop signal SS transferred from the UVLO. When an input voltage Vin is changed to a level lower than that of an operation voltage for operation of the power supply unit, the switching stop signal SS is output from the UVLO.

As shown in FIG. 5, the GD includes first and second transistors T1 and T2 that operate to correspond to a switching delay signal DSS and a switching duty control signal SDC output from the UVLO.

The first and second transistors T1 and T2 are located between an input voltage line to which an input voltage Vin is supplied and a low potential voltage line to which a low potential voltage GND is supplied. In the first transistor T1, a gate electrode is connected to a switching delay signal line to which a switching delay signal DSS is supplied, a first electrode is connected to an input voltage line, and a second electrode is connected to a gate electrode of the first switching transistor SWA. In the second transistor T2, a gate electrode is connected to a switching duty control signal line to which a switching duty control signal SDC is supplied, a first electrode is connected to a low potential voltage line, and a second electrode is connected to a gate electrode of the first switching transistor SWA.

The first and second transistors T1 and T2 control the first switching transistor SWA to correspond to the switching delay signal DSS and the switching duty control signal SDC. A switching signal that controls a switching operation of the first switching transistor SWA varies a pulse width or a duty according to a turn on/turn off operation of the first and second transistors T1 and T2.

However, this is an illustration, and in order to prepare a case in which a power source of a GD is not enough only with an input voltage Vin, the power source of the GD may be formed as follows.

However, a gate voltage driver according to a second exemplary embodiment described hereinafter is different from the gate voltage driver of FIG. 4, the gate voltage driver is described in detail hereinafter, and portions related to other configurations are identical to or corresponding to those of the first exemplary embodiment and therefore a detailed description thereof is omitted.

### <Second exemplary embodiment>

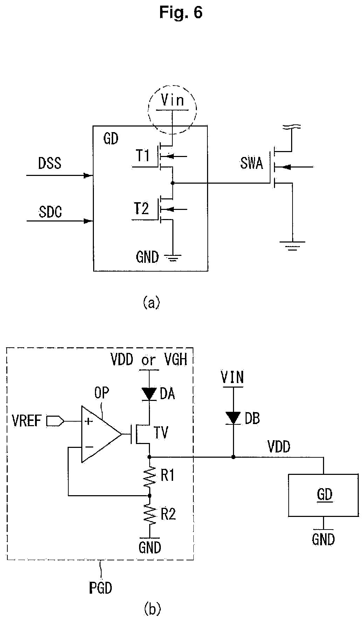

FIG. 6 is a diagram illustrating a circuit configuration of a gate voltage driver of FIG. 4 according to a second exemplary embodiment of the present invention.

As shown in FIG. 6(a), a gate voltage driver (GD) includes first and second transistors T1 and T2 that operate to correspond to a switching duty control signal SDC and a switching delay signal DSS output from an UVLO.

As shown in FIG. 6(b), the GD further includes a gate voltage compensation unit (PGD) together with the foregoing circuit. The PGD is a circuit that compensates a voltage by preparing a case in which power of the GD is not enough with only an input voltage Vin.

The PGD receives the supply of a first power source voltage VDD or a gate high voltage VGH as power, and the GD supplies a voltage that can stably perform boost switching for a predetermined time to a power source terminal of the GD based on the first power source voltage VDD or the gate high voltage VGH.

The PGD includes a comparison circuit unit (OP amplifier circuit unit) (OP), a first diode DA, a voltage compensation transistor (TV), a first resistor (R1), and a second resistor (R2).

In the OP, a non-inverting terminal (+) is connected to a reference line to which a reference voltage VREF is supplied, an inverting terminal (-) is connected to a node between the R1 and the R2, and an output terminal is connected to the TV. The OP compares a preset reference voltage VREF and a voltage of an output terminal thereof, and when a voltage to supply to a power source terminal of the GD is insufficient, the OP operates to output a first power source voltage VDD or a gate high voltage VGH.

In the TV, a gate electrode is connected to the OP, a first electrode is connected to the other end of the first diode DA, and a second electrode is connected to one end of the R1. The second electrode of the TV becomes an output terminal that outputs a voltage output from the PGD and is connected to a power source terminal of the GD.

In the first diode DA, an anode electrode is connected to a voltage line that supplies a first power source voltage VDD or a gate high voltage VGH, and a cathode electrode is connected to a first electrode of the TV. In the R1, one end thereof is connected to a second electrode of the TV and the other end thereof is connected to one end of the R2. In the R2, one end thereof is connected to the other end of the R1 and an inverting terminal (-) of the OP, and the other end thereof is connected to a low potential voltage line to which a low potential voltage GND is supplied.

In a second diode DA, an anode electrode is connected to an input voltage line to which an input voltage Vin is supplied, and a cathode electrode is connected to an output terminal of the PGD. The second diode DA performs a function of preventing collision between an input voltage Vin and a first power source voltage VDD or a gate high voltage VGH output through an output terminal of the PGD. However, the second diode DA may be replaced with another passive element or circuit.

In a second exemplary embodiment of the present invention, generation and output of a gate high voltage VGH based on an input voltage Vin or a first power source voltage VDD for a dummy switching period has been described as an example. However, this is an exemplary embodiment and a power supply unit detects an input voltage Vin, a first power source voltage VDD, or another high potential voltage through a voltage detection unit for a dummy switching period and determines a level thereof and may temporarily generate and output a gate high voltage VGH using a voltage of a highest level among them.

This may be used when a source voltage to convert to a gate high voltage VGH is not enough. In this case, at the inside of the power supply unit, a voltage detection unit that can detect and compare an input voltage or an output voltage is further included.

### <Third exemplary embodiment>

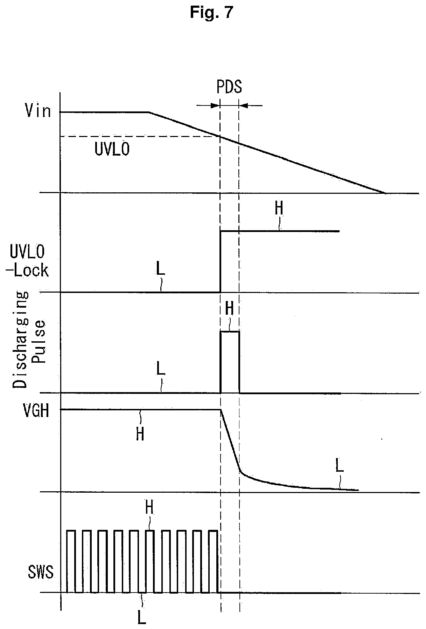

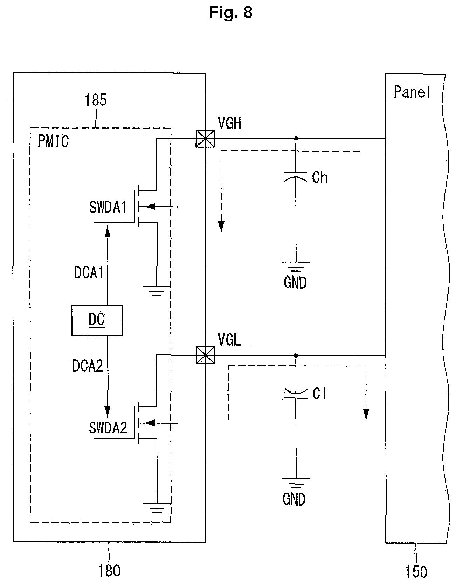

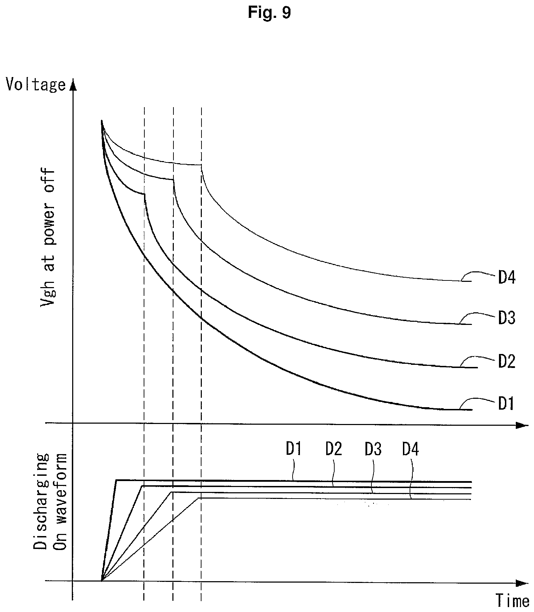

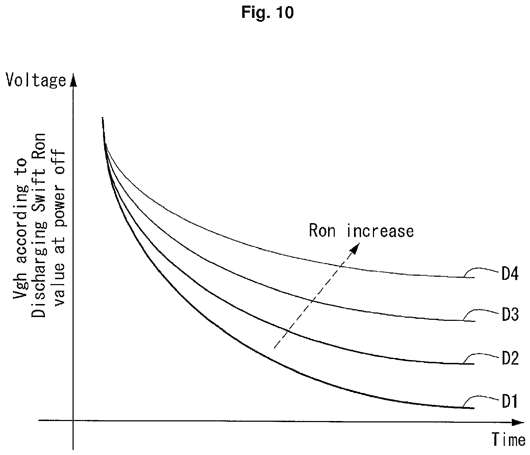

FIG. 7 is a waveform diagram illustrating a method of driving a device according to a third exemplary embodiment of the present invention, FIG. 8 is a diagram illustrating a circuit configuration of a portion of a power supply unit according to a third exemplary embodiment of the present invention, and FIGS. 9 and 10 are graphs illustrating an effect according to a third exemplary embodiment of the present invention.

As shown in FIGS. 7 and 8, in a display device according to a third exemplary embodiment of the present invention, even after an input voltage Vin input to a power supply unit 180 is dropped to a level of a Under Voltage Lock Out (hereinafter, UVLO) or less due to power off, a discharge pulse that discharges a display panel 150 occurs. In FIG. 7, VGH means a gate high voltage, and SWS means a switching signal (a description related thereto is described with reference to the first exemplary embodiment).

An input voltage Vin input to the power supply unit 180 is dropped to a level of Under Voltage Lock Out (hereinafter, UVLO) or less due to power off. In this case, a UVLO circuit unit outputs a lock signal (UVLO-Lock) changed from a logic low signal to a logic high signal. When a lock signal (UVLO-Lock) of logic high is output from the UVLO circuit unit, the UVLO circuit unit is in a state to which UVLO is applied. In this case, a voltage output from the power supply unit 180 is dropped with discharge.

When UVLO is applied to the power supply unit 180 due to power off, the power supply unit 180 changes a discharging pulse that discharges (discharging an output voltage) an output terminal thereof from a logic low signal to a logic high signal. That is, the power supply unit 180 activates a discharging pulse that discharges an output terminal thereof after entering to UVLO.

As shown in FIG. 8, the power supply unit 180 includes a discharge circuit unit 185. The discharge circuit unit 185 includes a discharge controller (DC) that controls discharge, a gate high voltage discharge unit (SWDA1) that discharges a gate high voltage VGH, and a gate low voltage discharge unit (SWDA2) that discharges a gate low voltage VGL. The discharge circuit unit 185 performs a function of discharging a gate signal.

The gate high voltage VGH and the gate low voltage VGL correspond to a gate signal supplied to the display panel 150. The gate high voltage VGH is a voltage that turns on a transistor included in subpixels of the display panel 150, and the gate low voltage VGL is a voltage that turns off a transistor included in subpixels of the display panel 150.

In the SWDA1, a gate electrode is connected to an Alth discharging signal line of the DC, a first electrode is connected to an output terminal of a gate high voltage generator, and a second electrode is connected to a low potential voltage line.

When an Alth discharging signal DCA1 output from the DC is supplied, the SWDA1 discharges an output terminal of a gate high voltage generator. The SWDA1 performs a function of discharging residual electric charges (and residual electric charges of VGH existing at the display panel) of an output capacitor Ch located at an output terminal of a gate high voltage generator.

When an A2th discharging signal DCA2 output from the DC is supplied, the SWDA2 discharges an output terminal of a gate low voltage generator. The SWDA2 performs a function of discharging residual electric charges (and residual electric charges of VGL existing at a display panel) of an output capacitor Cl located at an output terminal of the gate low voltage generator.

As shown in FIG. 9, in a third exemplary embodiment of the present invention, a switch on time (Discharging On waveform) of the SWDA1 may be varied as in D1-D4. In this case, when power is turned off, a discharge slope of a gate high voltage (vgh at Power Off) may be turned as in D1-D4 to correspond to an environment of a user or a display panel. This includes a SWDA2.

As shown in FIG. 10, in a third exemplary embodiment of the present invention, by varying an on resistance (Discharging Switch Ron) value of the SWDA1, a discharge waveform of a gate high voltage may be turned as in D1-D4.

As described above, the SWDA1 and the SWDA2 are formed with a transistor (or a switching element). The SWDA1 and the SWDA2 formed with a transistor may quickly discharge electric charges remaining at an output capacitor or a display panel existing at an output terminal of a power supply unit.

Conventionally, technology that discharges using a resistor has been suggested. However, in the conventional art, when a device normally operates as well as when power is turned off, there is a problem that a current flows and thus an unnecessary power loss occurs.

However, as in a third exemplary embodiment of the present invention, when the SWDA1 and the SWDA2 are formed with a transistor instead of a resistor, discharge acceleration and a discharge speed can be adjusted and current leakage against a resistor can be prevented and thus consumption power of the device can be enhanced.

### <Fourth exemplary embodiment>

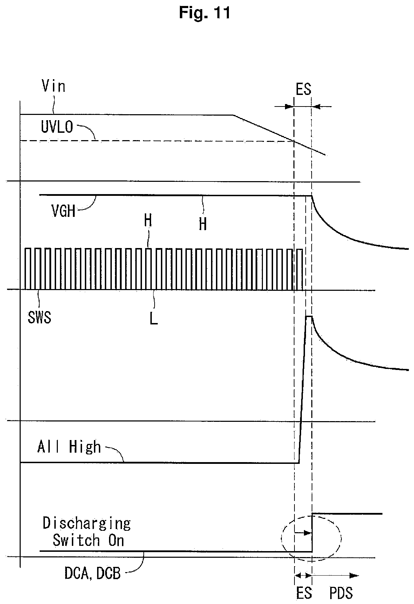

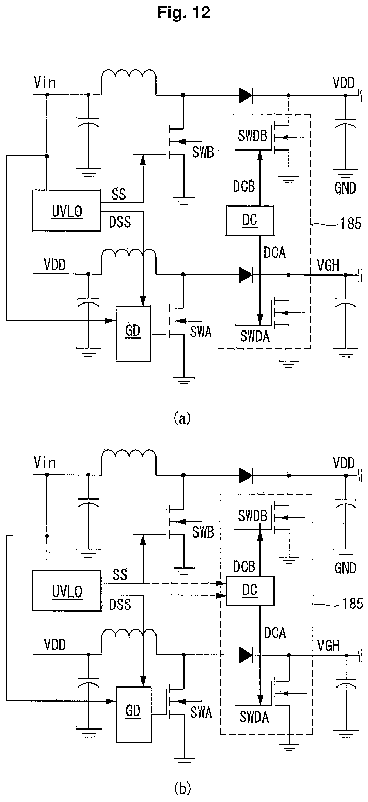

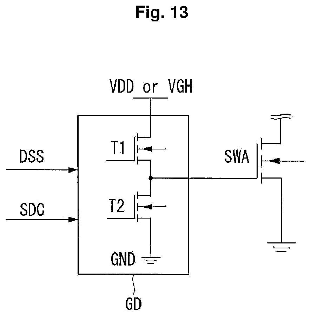

FIG. 11 is a waveform diagram illustrating a method of driving a device according to a fourth exemplary embodiment of the present invention, FIG. 12 is a diagram illustrating a circuit configuration of a portion of a power supply unit according to a fourth exemplary embodiment of the present invention, and FIG. 13 is a diagram illustrating a circuit configuration of a gate voltage driver of FIG. 12.

As shown in FIGS. 11 and 12, in a display device according to a fourth exemplary embodiment of the present invention, even after an input voltage Vin input to a power supply unit is dropped to a level of a Under Voltage Lock Out (hereinafter, UVLO) or less due to power off, a switching signal SWS for driving switching transistors SWA and SWB is not stopped but maintained (or delayed) for a predetermined time. In FIG. 11, All High means a gate all high signal.

In the conventional art, when an input voltage Vin is dropped to UVLO or less due to power off, a switching signal SWS for driving switching transistors SWA and SWB is stopped. Therefore, the conventional art forms a gate high voltage VGH with a voltage charged at the inside of a power supply unit in a state in which the power supply unit stops operation.

However, in a fourth exemplary embodiment of the present invention, even if an input voltage Vin is dropped to UVLO or less due to power off, a switching signal SWS for driving a first switching transistor SWA is further maintained for a dummy switching period ES. Therefore, in a fourth exemplary embodiment of the present invention, in a state in which a power supply unit maintains operation for a predetermined time, a voltage is generated and a gate high voltage VGH is formed based on the generated voltage.

Therefore, in a fourth exemplary embodiment of the present invention, a gate all high signal (All High) is generated based on a high level of gate high voltage VGH that has occurred for a dummy switching period ES. Therefore, in a fourth exemplary embodiment of the present invention, when power is turned off (after UVLO Lock), discharging of a panel can be stably performed.

Further, in a display device according to a fourth exemplary embodiment of the present invention, a discharging period PDS that discharges residual electric charges of a display panel is activated after the dummy switching period ES.

Hereinafter, a description will be made based on a circuit configuration of FIGS. 11 and 12.

A power supply unit according to a fourth exemplary embodiment of the present invention generates and outputs a first power source voltage VDD and a gate high voltage VGH based on an input voltage Vin. The power supply unit includes an UVLO circuit unit (UVLO), a gate voltage driver (GD), first and second switching transistors SWA and SWB, and a discharge circuit unit 185. The power supply unit includes a first power source voltage generator that generates and outputs a first power source voltage VDD and a gate high voltage generator that generates and outputs a gate high voltage VGH.

The UVLO monitors an input voltage Vin, and when the input voltage Vin is changed to a level lower than an operation voltage for operation of the power supply unit, the UVLO performs a function of stopping a switching operation in order to protect a circuit.

For example, when an input voltage Vin is changed (dropped) to a level lower than an operation voltage due to power off of the device, the UVLO immediately stops a switching operation of the second switching transistor SWB. However, even if an input voltage Vin is dropped to a level lower than an operation voltage due to power off, the UVLO maintains a switching operation of the first switching transistor SWA for a predetermined time (dummy switching period).

The GD outputs a switching signal SWS that controls the first switching transistor SWA to boost a first power source voltage VDD transferred from a first power source voltage generator to convert the first power source voltage VDD to a gate high voltage VGH.

The GD outputs a switching signal SWS that may maintain a switching operation of the first switching transistor SWA for a predetermined time (dummy switching period) to correspond to a switching delay signal DSS transferred from the UVLO. When the switching delay signal DSS is transferred from the UVLO, the GD may convert an input voltage Vin and generate and output a gate high voltage VGH.

The first switching transistor SWA switches a first power source voltage VDD to correspond to a switching signal SWS output from the GD and generates and outputs a gate high voltage VGH. The first switching transistor SWA may generate and output a gate high voltage VGH for a predetermined time (dummy switching period) to correspond to a switching delay signal DSS transferred from the UVLO.

The second switching transistor SWB switches an input voltage Vin to correspond to a signal output from an internal circuit and generates and outputs a first power source voltage VDD. The second switching transistor SWB stops a switching operation to correspond to a switching stop signal SS transferred from the UVLO. When an input voltage Vin is changed to a level lower than an operation voltage for operation of the power supply unit, the switching stop signal SS is output from the UVLO.

As shown in FIG. 12(a), the power supply unit includes a discharge circuit unit 185 that discharges residual electric charges of the display panel. The discharge circuit unit 185 generates and outputs discharging signals DCA and DCB for discharging residual electric charges (residual electric charges accumulated in the display panel by VGH) of the display panel.

The discharge circuit unit 185 includes a discharge controller (DC), a gate high voltage discharge unit (SWDA) that discharges a gate high voltage VGH output from a gate high voltage generator, and a first power source voltage discharge unit (SWDB) that discharges a first power source voltage VDD output from a first power source voltage generator.

In the SWDA, a gate electrode is connected to a first discharging signal line of the DC, a first electrode is connected to an output terminal of the gate high voltage generator, and a second electrode is connected to a low potential voltage line. When a first discharging signal DCA corresponding to logic high is supplied from the DC, the SWDA discharges an output terminal of the gate high voltage generator.

In the SWDB, a gate electrode is connected to a second discharging signal line of the DC, a first electrode is connected to an output terminal of the first power source voltage generator, and a second electrode is connected to a low potential voltage line. When a second discharging signal DCB corresponding to logic high is supplied from the DC, the SWDB discharges an output terminal of the first power source voltage generator.

The discharge circuit unit 185 of the power supply unit is used for enhancing power consumption of the display device. However, when the discharge circuit unit 185 independently operates, a period activated for discharging a display panel may conflict with a dummy switching period ES.

As shown in FIG. 12(b), the discharge circuit unit 185 generates and outputs first and second discharging signals DCA and DCB for discharging residual electric charges of the display panel, but generates the first and second discharging signals DCA and DCB after a switching delay signal DSS output from the UVLO is terminated. That is, the first and second discharging signals DCA and DCB are activated at the discharging period PDS located after the dummy switching period ES.

For example, the first and second discharging signals DCA and DCB maintain a logic low signal for a display period that displays an image and a dummy switching period ES. However, after the dummy switching period ES is terminated, the discharge circuit unit 185 maintains a logic high signal for the discharging period PDS.

In a fourth exemplary embodiment of the present invention, when generating a Discharging Switch On time using for discharging a display panel at the discharging period PDS after the dummy switching period ES is terminated, at power off, operation using a gate high voltage VGH can be performed in normal flow.

As shown in FIG. 13, the GD includes first and second transistors T1 and T2 that operate to correspond to a switching delay signal DSS and a switching duty control signal SDC output from the UVLO.

The first and second transistors T1 and T2 are located between a voltage line to which a first power source voltage VDD or a gate high voltage VGH is supplied and a low potential voltage line to which a low potential voltage GND is supplied. In the first transistor T1, a gate electrode is connected to a switching delay signal line to which a switching delay signal DSS is supplied, a first electrode is connected to a voltage line to which the first power source voltage VDD or the gate high voltage VGH is supplied, and a second electrode is connected to a gate electrode of the first switching transistor SWA. In the second transistor T2, a gate electrode is connected to a switching duty control signal line to which a switching duty control signal SDC is supplied, a first electrode is connected to a low potential voltage line, and a second electrode is connected to a gate electrode of the first switching transistor SWA.

The first and second transistors T1 and T2 control the first switching transistor SWA to correspond to a switching delay signal DSS and a switching duty control signal SDC. A switching signal that controls a switching operation of the first switching transistor SWA varies a pulse width or a duty according to a turn on/turn off operation of the first and second transistors T1 and T2. However, this is an illustration and the GD may be formed as described with reference to FIG. 6.

As described above, the present invention can prevent (can improve reliability of a device) a problem that a discharging operation of a panel is recognized by an eye of a person or that image quality deterioration (screen shake) occurs by discharging an output terminal of a power supply unit and a display panel with a stable voltage when power of a device is turned off. Further, the present invention can enhance power consumption by removing an unnecessary power loss while a normal operation based on a discharge circuit that can actively operate.

## Claims

1. A display device, comprising:
a display panel (150) configured to display an image;
a gate driver (130) configured to supply a gate signal to the display panel (150);
a data driver (140) configured to supply a data signal to the display panel (150); and
a power supply unit (180) configured to generates and outputs a voltage to be supplied to the gate driver (130) and the data driver (140) based on an input voltage (Vin), to generate a voltage in a dummy switching period (ES) in which a switching signal (SWS) that generates a gate high voltage (VGH) is maintained for a predetermined time even after the input voltage (Vin) is dropped to level of Under Voltage Lock Out, UVLO, or less due to power off,
wherein the power supply unit (180) comprises:
an UVLO circuit unit configured to monitor whether the input voltage (Vin) is dropped to a level of UVLO or less and to maintain the switching operation of a first switching transistor (SWA) for the predetermined time,
a first power source voltage generator configured to generate and outputs a first power source voltage (VDD) based on the input voltage (Vin); and
a gate high voltage generator comprises the first switching transistor (SWA) and is
configured to generate and to output the gate high voltage (VGH),
wherein the gate high voltage generator comprises a gate voltage driver (GD) configured to output the switching signal (SWS) to correspond to a signal (DSS) transferred from the UVLO circuit unit and the first switching transistor (SWA) is configured to perform dummy switching for generating the gate high voltage (VGH) in the dummy switching period (ES) to correspond to the switching signal (SWS),
wherein the gate voltage driver (GD) further comprises a gate voltage compensation unit (PGD) configured to compensate a level for generating the gate high voltage (VGH) with the first power source voltage (VDD) or the gate high voltage (VGH),
wherein the gate voltage compensation unit (PGD) comprises:
a comparison circuit unit (OP) having a non-inverting terminal connected to a reference line to which a reference voltage (VREF) is supplied, an inverting terminal connected to a node between a first resistor (R1) and a first terminal of a second resistor (R2), and an output terminal connected to a gate electrode of a voltage compensation transistor (TV);
the voltage compensation transistor (TV) having a first electrode connected to the cathode of a first diode (DA), and a second electrode connected to the other terminal of the first resistor (R1) and a power source terminal of the gate voltage driver (GD);
the first diode (DA) having an anode electrode connected to a voltage line that supplies the first power source voltage (VDD) or the gate high voltage (VGH) ; and the second resistor (R2) having the other end connected to a low potential voltage line to
the second resistor (R2) having the other end connected to a low potential voltage line to which a low potential voltage (GND) is supplied.

2. The display device of claim 1, wherein the gate voltage driver (GD) is configured to vary a pulse width or a duty of the switching signal (SWS) to correspond to a signal transferred from the UVLO circuit unit.

3. The display device of any one of claims 1 to 2, wherein the power supply unit (180) further comprises a discharge circuit unit (185) configured to discharge the gate signal,
wherein the discharge circuit unit (185) is configured to have a discharging period that discharges residual electric charges by a signal output therefrom after the dummy switching period (ES) is terminated.

4. The display device of claims 1 or 2, wherein the power supply unit (180) further comprises a discharge circuit unit (185) configured to discharge the gate signal, wherein the discharge circuit unit (185) is configured to discharge an output terminal thereof in synchronism with the discharging period (ES) to correspond to a signal transferred from the UVLO circuit unit.

5. The display device of claim 3 or 4, wherein the discharge circuit unit (185) comprises:
a discharge controller (DC) configured to output a discharging signal (DCA1, DCA2; DCA, DCB) to correspond to a signal transferred from the UVLO circuit unit; and
a voltage discharge unit (SWDA1, SWDA2; SWDA, SWDB) configured to discharge an output terminal thereof to correspond to the discharging signal (DCA1, DCA2; DCA, DCB) transferred from the discharge controller (DC).

6. The display device of claim 5, wherein the voltage discharge unit (SWDA1, SWDA2; SWDA, SWDB) is configured to discharge output terminals of an first power source voltage generator, a gate high voltage generator, and a gate low voltage generator included in the power supply unit (180) to correspond to the discharging signal (DCA, DCB).

7. A method of driving a display device according to one of the preceding claims, the method comprising:
displaying an image in a display panel (150);
monitoring a power supply unit (180) configured to supply a voltage to a gate driver (130) and a data driver (140) that are configured to drive the display panel (150) and detecting whether an input voltage (Vin) input to the power supply unit (180) is dropped to a level of Under Voltage Lock Out, UVLO, or less; and
generating a voltage, if an input voltage (Vin) input to the power supply unit is dropped to a level of the UVLO or less due to power off, as dummy switching so as to maintain a switching signal (SWS) that generates a gate high voltage (VGH) to be supplied to the display panel (150) for a predetermined time.

8. The method of claim 7, further comprising discharging an output terminal of the power supply unit (180) after performing of dummy switching is terminated.

## Patentansprüche

1. Anzeigevorrichtung, die Folgendes umfasst:
eine Anzeigetafel (150), die konfiguriert ist, ein Bild anzuzeigen;
einen Gate-Treiber (130), der konfiguriert ist, ein Gate-Signal an die Anzeigetafel (150) zu liefern;
einen Datentreiber (140), der konfiguriert ist, ein Datensignal an die Anzeigetafel (150) zu liefern; und
eine Leistungsversorgungseinheit (180), die konfiguriert ist, eine Spannung, die an den Gate-Treiber (130) und an den Datentreiber (140) geliefert werden soll, anhand einer Eingangsspannung (Vin) zu erzeugen und auszugeben, um eine Spannung in einer Blindschaltperiode (ES) zu erzeugen, in der ein Schaltsignal (SWS), das eine hohe Gate-Spannung (VGH) erzeugt, selbst dann für eine vorgegebene Zeit gehalten wird, wenn die Eingangsspannung (Vin) aufgrund einer Leistungsunterbrechung auf einen Pegel unter eine Sperrspannung, UVLO, oder niedriger abgefallen ist,
wobei die Leistungsversorgungseinheit (180) Folgendes umfasst:
eine UVLO-Schaltungseinheit, die konfiguriert ist, zu überwachen, ob die Eingangsspannung (Vin) auf einen UVLO-Pegel oder weniger abgefallen ist, und den Schaltvorgang eines ersten Schalttransistors (SWA) für die vorgegebene Zeit aufrecht zu erhalten,
einen ersten Leistungsquellen-Spannungsgenerator, der konfiguriert ist, eine erste Leistungsquellenspannung (VDD) anhand der Eingangsspannung (Vin) zu erzeugen und auszugeben; und
einen Gate-Hochspannungsgenerator, der den ersten Schalttransistor (SWA) enthält und konfiguriert ist, die hohe Gate-Spannung (VGH) zu erzeugen und auszugeben,
wobei der Generator für hohe Gate-Spannung einen Gate-Spannungstreiber (GD) enthält, der konfiguriert ist, das Schaltsignal (SWS) auszugeben, damit es einem Signal (DSS) entspricht, das von der UVLO-Schaltungseinheit übertragen wird, und der erste Schalttransistor (SWA) konfiguriert ist, ein Blindschalten auszuführen, um die hohe Gate-Spannung (VGH) in der Blindschaltperiode (ES) zu erzeugen, so dass sie dem Schaltsignal (SWS) entspricht,
wobei der Gate-Spannungstreiber (GD) ferner eine Gate-Spannungsausgleichseinheit (PGD) umfasst, die konfiguriert ist, einen Pegel zum Erzeugen der hohen Gate-Spannung (VGH) mit der ersten Leistungsquellenspannung (VDD) oder mit der hohen Gate-Spannung (VGH) auszugleichen,
wobei die Gate-Spannungsausgleichseinheit (PGD) Folgendes umfasst:
eine Vergleichsschaltungseinheit (OP), die einen nicht invertierenden Anschluss, der mit einer Referenzleitung verbunden ist, der eine Referenzspannung (VREF) zugeführt wird, und einen invertierenden Anschluss, der mit einem Knoten zwischen einem ersten Widerstand (R1) und einem ersten Anschluss eines zweiten Widerstands (R2) verbunden ist, und einen Ausgangsanschluss, der mit einer Gate-Elektrode eines Spannungsausgleichstransistors (TV) verbunden ist, besitzt;
wobei der Spannungsausgleichstransistor (TV) eine erste Elektrode, die mit der Katode einer ersten Diode (BA) verbunden ist, und eine zweite Elektrode, die mit dem anderen Anschluss des ersten Widerstands (R1) und mit einem Leistungsquellenanschluss des Gate-Spannungstreibers (GD) verbunden ist, besitzt;
wobei die erste Diode (DA) eine Anodenelektrode besitzt, die mit einer Spannungsleitung verbunden ist, die die erste Leistungsquellenspannung (VDD) oder die hohe Gate-Spannung (VGH) liefert; und
der zweite Widerstand (R2) mit dem anderen Ende mit einer Spannungsleitung mit niedrigem Potential verbunden ist, der eine Spannung (GND) mit niedrigem Potential zugeführt wird.

2. Anzeigevorrichtung nach Anspruch 1, wobei der Gate-Spannungstreiber (GD) konfiguriert ist, eine Impulsbreite oder einen Tastgrad des Schaltsignals (SWS) so zu variieren, dass es einem Signal entspricht, das von der UVLO-Schaltungseinheit übertragen wird.

3. Anzeigevorrichtung nach einem der Ansprüche 1 bis 2, wobei die Leistungsversorgungseinheit (180) ferner eine Entladungsschaltungseinheit (185) umfasst, die konfiguriert ist, das Gate-Signal zu entladen,
wobei die Entladungsschaltungseinheit (185) so konfiguriert ist, dass sie eine Entladungsperiode hat, in der restliche elektrische Ladungen durch einen Signalausgang hiervon entladen werden, nachdem die Blindschaltperiode (ES) beendet worden ist.

4. Anzeigevorrichtung nach den Ansprüchen 1 oder 2, wobei die Leistungsversorgungseinheit (180) ferner eine Entladungsschaltungseinheit (185) umfasst, die konfiguriert ist, das Gate-Signal zu entladen, wobei die Entladungsschaltungseinheit (185) konfiguriert ist, einen Ausgangsanschluss hiervon synchron mit der Entladungsperiode (ES) zu entladen, damit er einem Signal entspricht, das von der UVLO-Schaltungseinheit übertragen wird.

5. Anzeigevorrichtung nach Anspruch 3 oder 4, wobei die Entladungsschaltungseinheit (185) Folgendes umfasst:
eine Entladungssteuereinheit (DC), die konfiguriert ist, ein Entladungssignal (DC1, DCA2, DCA, DCB) so auszugeben, dass es einem Signal entspricht, das von der UVLO-Schaltungseinheit übertragen wird; und
eine Spannungsentladungseinheit (SWDA1, SWDA2; SWDA, SWDB), die konfiguriert ist, einen Ausgangsanschluss hiervon so zu entladen, dass er dem Entladungssignal (DCA1, DCA2; DCA, DCB) entspricht, das von der Entladungssteuereinheit (DC) übertragen wird.

6. Anzeigevorrichtung nach Anspruch 5, wobei die Spannungsentladungseinheit (SWDA1, SWDA2; SWDA, SWDB) konfiguriert ist, Ausgangsanschlüsse eines ersten Leistungsquellen-Spannungsgenerators, eines Generators für hohe Gate-Spannung und eines Generators für niedrige Gate-Spannung, die in der Leistungsversorgungseinheit (180) enthalten sind, so zu entladen, dass sie dem Entladungssignal (DCA, DCB) entsprechen.

7. Verfahren zum Ansteuern einer Anzeigevorrichtung nach einem der vorhergehenden Ansprüche, wobei das Verfahren Folgendes umfasst:
Anzeigen eines Bildes auf einer Anzeigetafel (150);
Überwachen einer Leistungsversorgungseinheit (180), die konfiguriert ist, eine Spannung an einen Gate-Treiber (130) und an einen Datentreiber (140) zu liefern, die konfiguriert sind, die Anzeigetafel (150) anzusteuern und zu detektieren, ob eine Eingangsspannung (Vin), die in die Leistungsversorgungseinheit (180) eingegeben wird, auf einen Pegel einer Sperrspannung (UVLO) oder weniger abgefallen ist; und
Erzeugen einer Spannung, falls eine Eingangsspannung (Vin), die in die Leistungsversorgungseinheit eingegeben wird, aufgrund einer Leistungsunterbrechung auf einen Pegel der UVLO oder weniger abgefallen ist, als einen Blindschaltvorgang, um so ein Schaltsignal (SWS), das eine der Anzeigetafel (150) zuzuführende hohe Gate-Spannung (VGH) erzeugt, für eine vorgegebene Zeit aufrecht zu erhalten.

8. Verfahren nach Anspruch 7, das ferner das Entladen eines Ausgangsanschlusses der Leistungsversorgungseinheit (180), nachdem die Ausführung eines Blindschaltvorgangs beendet worden ist, umfasst.

## Revendications

1. Dispositif d'affichage, comprenant :
un panneau d'affichage (150) configuré pour afficher une image ;
un dispositif d'attaque de grille (130) configuré pour alimenter un signal de grille au panneau d'affichage (150) ;
un dispositif d'attaque de données (140) configuré pour alimenter un signal de données au panneau d'affichage (150) ; et
une unité d'alimentation électrique (180) configurée pour générer et délivrer une tension à alimenter au dispositif d'attaque de grille (130) et au dispositif d'attaque d données (140) sur la base d'une tension d'entrée (Vin), pour générer une tension dans une période de commutation fictive (ES) pendant laquelle un signal de commutation (SWS) qui génère une tension haute de grille (VGH) est maintenue pendant une durée prédéterminée même après que la tension d'entrée (Vin) a baissé à un niveau de verrouillage en cas de tension basse UVLO ou inférieur en raison d'une coupure de courant, dans lequel l'unité d'alimentation électrique (180) comprend :
une unité de circuit UVLO configurée pour surveiller si la tension d'entrée (Vin) a baissé à un niveau de UVLO ou inférieur et maintenir l'opération de commutation d'un premier transistor de commutation (SWA) pour la durée prédéterminée,
un premier générateur de tension source d'alimentation configuré pour générer et délivrer une première tension source d'alimentation (VDD) sur la base de la tension d'entrée (Vin) ; et
un générateur de tension haute de grille comprend le premier transistor de commutation (SWA) et est configuré pour générer et délivrer la tension de grille haute (VGH),
dans lequel le générateur de tension de grille haute comprend un dispositif d'attaque de tension de grille (GD) configuré pour délivrer le signal de commutation (SWS) pour correspondre à un signal (DSS) transféré depuis l'unité de circuit UVLO et le premier transistor de commutation (SWA) est configuré pour effectuer une commutation fictive pour générer la tension haute de grille (VGH) dans la période de commutation fictive (ES) pour correspondre au signal de commutation (SWS),
dans lequel le dispositif d'attaque de tension de grille (GD) comprend en outre une unité de compensation de tension de grille (PGD) configurée pour compenser un niveau pour générer la tension haute de grille (VGH) avec la première tension source d'alimentation (VDD) ou la tension haute de grille (VGH),
dans lequel l'unité de compensation de tension de grille (PGD) comprend :
une unité de circuit de comparaison (OP) ayant une borne non inverseuse connectée à une ligne de référence à laquelle une tension de référence (VREF) est alimentée, une borne inverseuse connectée à un noeud entre la première résistance (R1) et une première borne d'une seconde résistance (R2), et une borne de sortie connectée à une électrode de grille d'une transistor de compensation de tension (TV) ;
le transistor de compensation de tension (TV) ayant une première électrode connectée à la cathode d'une première diode (DA) et une seconde électrode connectée à l'autre borne de la première résistance (R1) et une borne source d'alimentation du dispositif d'attaque de tension de grille (GD) ;
la première diode (DA) ayant une électrode d'anode connectée à une ligne de tension qui alimente la première tension source d'alimentation (VDD) ou la tension haute de grille (VGH) ;
et
la seconde résistance (R2) ayant son autre extrémité connectée à une ligne de tension à bas potentiel à laquelle une tension à bas potentiel (GND) est alimentée.

2. Dispositif d'affichage selon la revendication 1, dans lequel le dispositif d'attaque de tension de grille (GD) est configuré pour varier une largeur d'impulsion ou un cycle du signal de commutation (SWS) pour correspondre à un signal transféré de l'unité de circuit UVLO.

3. Dispositif d'affichage selon une quelconque des revendications 1 à 2, dans lequel l'unité d'alimentation électrique (180) comprend en outre une unité de circuit de décharge (185) configuré pour décharger le signal de grille, dans lequel l'unité de circuit de décharge (185) est configuré pour avoir une période de décharge qui décharge des charges électriques résiduelles par un signal sorti de celle-ci après que la période de commutation fictive (ES) a pris fin.

4. Dispositif d'affichage selon les revendications 1 ou 2, dans lequel l'unité d'alimentation électrique (180) comprend en outre une unité de circuit de décharge (185) configurée pour décharger le signal de grille, dans lequel l'unité de circuit de décharge (185) est configuré pour décharger une borne de sortie de celle-ci en synchronisation avec la période de décharge (ES) pour correspondre à un signal transféré depuis l'unité de circuit UVLO.

5. Dispositif d'affichage selon la revendication 3 ou 4, dans lequel l'unité de circuit de décharge (185) comprend :
un contrôleur de décharge (DC) configuré pour délivrer un signal de décharge (DCA1, DCA2 ;DCA, DCB) pour correspondre à un signal transféré depuis l'unité de circuit UVLO ; et
une unité de décharge de tension (SWDA1,SWDA2 ;SWDA,DWDB) configurée pour décharger une borne de sortie de celle-ci pour correspondre au signal de décharge (DCA1,DCA2 ;DCA,DCB) transféré depuis le contrôleur de décharge (DC).

6. Dispositif d'affichage selon la revendication 5, dans lequel l'unité de décharge de tension (SWDA1,SWDA2 ;SWDA,SWDB) est configurée pour décharger des bornes de sortie d'un premier générateur de tension source d'alimentation, un générateur de tension haute de grille et un générateur de tension basse de grille inclus dans l'unité d'alimentation électrique (180) pour correspondre au signal de décharge (DCA,DCB).

7. Procédé d'attaque d'un dispositif d'affichage selon une des revendications précédentes, le procédé comprenant de :
afficher une image dans un panneau d'affichage (150) ;
surveiller une unité d'alimentation électrique (180) configurée pour alimenter une tension à un dispositif d'attaque de grille (130) et un dispositif d'attaque de données (140) qui sont configurés pour attaquer le panneau d'affichage (150) et détecter si une tension d'entrée (Vin) entrée dans l'unité d'alimentation électrique (180) a baissé à un niveau de verrouillage en cas de tension basse UVLO ou inférieur ; et
générer une tension, si une tension d'entrée (Vin) entrée dans l'unité d'alimentation électrique a baissé à un niveau de UVLO ou inférieur en raison d'une coupure de courant, comme commutation fictive de manière à maintenir un signal de commutation (SWS) qui génère une tension haute de grille (VGH) à alimenter au panneau d'affichage (150) pendant une durée prédéterminée.

8. Procédé selon la revendication 7, comprenant en outre de décharger une borne de sortie de l'unité d'alimentation électrique (180) après que la commutation fictive a pris fin.
